# EUROPEAN PATENT APPLICATION

(11) **EP 4 339 996 A1**
(43) Date of publication of application: **20.03.2024**
(21) Application number: 23191950.7
(22) Date of filing: 17.08.2023
(51) Int. Cl.: H01J 49/04, H01J 49/10

(54) **SYSTEM FOR ANALYZING A SAMPLE**

(30) Priority: 15.09.2022 US 202263375746 P
(71) Applicant: Analytik Jena GmbH+Co. KG, 07745 Jena (DE)
(72) Inventor: Kalinitchenko, Iouri, 07751 Jena-Maua (DE); Weisheit, Wolfram, 07589 Saara (DE)
(74) Representative: Koslowski, Christine Adelheid

(57) **Abstract**

The present invention relates to a system (1) for analyzing a sample (2), wherein the sample is an air composition or an aerosol, the system (1) comprising
- a sample preparation unit (3) with a sample inlet (4) and a plasma torch (5), wherein the
sample (2) enters the system (1) through the sample inlet (4), wherein the plasma torch
(5) is configured to produce a plasma (6) which ionizes the sample (2) such that ions
and/or photons are generated, wherein the plasma (6) is configured to aspirate the
sample (2) through the sample inlet (4),

- an interface (7) which is configured to guide the generated ions and/or photons towards
a detector (8),
- the detector (8) which is configured to detect the generated ions and/or photons, and
- an evaluation unit (9) which is configured to analyze the sample (2) by means of the
detected ions and/or photons.

## Description

The present invention relates to a system for analyzing a sample, wherein the sample is an air composition or an aerosol.

In a mass spectrometer, the molecules or atoms of a sample are first transferred into the gas phase and ionized. For ionization, various methods known from the state of the art are available, such as inductively coupled plasma ionization (ICP) which ionizes the sample by means of a plasma. Up to now, several different types of inductively coupled plasma mass spectrometers (ICP-MS) are available, as e. g. the quadrupole ICP-MS or time-of-flight ICP-MS.

After ionization, the ions pass through a vacuum interface to a mass analyzer, in which they are separated according to their mass-to-charge ratio m/z. Different types of interfaces and modes of operation are based, for example, on the application of static or dynamic electric and/or magnetic fields or on different times of flight of different ions. In particular, different types of interfaces include single, multiple or hybrid arrangements of analyzers, such as quadrupole, triple-quadrupole, time-of-flight (TOF), ion trap, Orbitrap or magnetic sector. Finally, the separated ions are guided towards a detector which, e.g., is one of a photo-ion multiplier, ion-electron multiplier, Faraday collector, Daly detector, microchannel plate or a channeltron.

During the ionization of a sample by means of inductively coupled plasma ionization (ICP), not only ions but also photons are generated from the sample which can be analyzed with optical spectrometers, e.g., inductively coupled plasma optical emission spectrometer (ICP-OES).

The inductively coupled plasma is usually sustained with Argon gas. Recently, an alternative ionization method has been described which uses Nitrogen gas for sustaining the plasma, the so called MICAP (microwave inductively coupled atmospheric plasma) which can be applied for mass spectrometry as well as for optical spectrometry (see US 9,706,635 B2). MICAP generates a plasma which is also sustainable with air.

Therefore, it is an object of the present invention to provide a system which is able to analyze samples containing air in an easy manner.

The object is achieved by a system for analyzing a sample, wherein the sample is an air composition or an aerosol, the system comprising
- a sample preparation unit with a sample inlet and a plasma torch, wherein the sample enters the system through the sample inlet, wherein the plasma torch is configured to produce a plasma which ionizes the sample such that ions and/or photons are generated, wherein the plasma is configured to aspirate the sample through the sample inlet,
- an interface which is configured to guide the generated ions and/or photons towards a detector,
- the detector which is configured to detect the generated ions and/or photons, and
- an evaluation unit which is configured to analyze the sample by means of the detected ions and/or photons.

With the present invention an air composition or an aerosol is aspirated (e.g. sucked, drawn or inhaled) into the spectrometer solely by means of the plasma alone. This air composition or aerosol can serve as the sample entering the system through the sample inlet. A pump or other means for transporting the sample through the sample inlet into the plasma are not necessary. The present invention allows for analyzing air compositions or aerosols on the spot.

The plasma typically ejects the generated ions and/or photons towards the interface. On the opposite side of the plasma to the interface the plasma has a zone with a negative pressure relative to the sample inlet. The suction property of the zone with the negative pressure can surprisingly be used for aspirating the air composition or aerosol into the system. By changing the parameters of the plasma, the flow rate of the sample being aspirated into the plasma may be adjusted. The flow rate of the sample being aspirated by means of the plasma may be within the range of 0.5 to 2 L/min (liters per minute), especially within 1.0 to 1.5 L/min.

An aerosol comprises particles and/or atoms and/or molecules dispersed in air. The air composition comprises ambient air, e.g., from the surroundings of the system, and may comprise particles and/or atoms and/or molecules. The system is able to analyze air with regard to its composition as well as atoms and/or molecules and/or particles dispersed in air. The particles may be present as dust or powder.

In one embodiment the system comprises a sample introduction unit which is configured to introduce the sample into the sample inlet. Especially if the sample comprises particles, it can be helpful to guide the sample towards the sample inlet so that the plasma is able to aspirate the sample through the sample inlet. The sample introduction unit is arranged upstream of the sample inlet. The words "upstream" and "downstream" are used within this disclosure to describe positions relative to the direction of the stream of the sample and the plasma generated ions and/or photons through the spectrometer.

In another embodiment the sample introduction unit comprises a transport means which is configured to transport the sample towards the inlet and a connecting unit which is connectable with the sample inlet.

One embodiment comprises that the sample comprises particles, wherein the sample introduction unit comprises a moving ribbon, a dosage controller and a connecting unit, wherein the connecting unit is connectable with the sample inlet, wherein the moving ribbon is configured to be loaded with the particles and to move the particles towards the sample inlet, wherein the dosage controller is configured to control the amount of the sample entering the sample inlet through the connecting unit. The moving ribbon serves as a transport means and transports the particles towards the sample inlet. In particular, the dosage controller may also be a dosage limiter and be configured to limit the amount of sample entering the sample inlet through the connecting unit.

In another embodiment the sample comprises particles, wherein the system comprises a classifier, wherein the classifier is configured to separate smaller particles from larger particles within the sample and to guide particles with a mass below a predefined upper mass limit to the sample inlet. Particles usually come with a particle size distribution which needs to be filtered prior to the particles entering the system. The classifier may be connectable to the sample inlet and arranged upstream of the sample inlet. The classifier may work according to the principle of mechanical screening or elutriation and may in particular be an air classifier.

Further, the classifier may comprise a container with an inlet and an outlet, and a tube partially inserted into the container, wherein the outlet is connectable to the sample inlet, wherein the inlet is connected to air or gas, wherein the tube is arranged and configured to flow the sample into the container such that the flow of the sample is opposed to the flow of the particles with a mass below a predefined upper mass limit towards the outlet. The particles with a mass above the predefined upper mass limit will gravitate towards a lower end of the container, whereas only the particles with a mass below the predefined upper mass limit will enter the system.

In another embodiment the classifier comprises a waste collector which is arranged such that particles with a mass above the predefined upper mass limit are collected in the waste collector.

It is further preferred that the classifier is arranged between the sample introduction unit and the sample inlet.

Further embodiments can comprise that the plasma is configured to be sustained with air, wherein the air is entering the plasma torch through the sample inlet. The air for sustaining the plasma can be part of the sample entering the system. The plasma torch may require a flow rate of air in the range 1.0 to 1.5 L/min in order to sustain the plasma which can be upheld by means of aspiration capacity of the plasma.

In another embodiment the sample comprises particles, wherein the evaluation unit is configured to analyze the particles in the sample with regard to their isotopic composition, size, concentration and/or number.

In a further embodiment the sample inlet is arranged upstream of the plasma torch.

The interface may comprise a mass-analyzer and/or a wavelength selector.

Further, the system may be a microwave inductively coupled atmospheric plasma mass spectrometer, a microwave inductively coupled atmospheric plasma optical emission spectrometer, a radio-frequency inductively coupled mass spectrometer, a radio-frequency inductively coupled optical spectrometer, a glow discharge mass spectrometer, or a glow discharge optical spectrometer.

In another embodiment the sample is produced by removal of material from a surface or object. The removal of material may be achieved by drilling or scratching and generate particles which either form an aerosol or which can be made to form an aerosol to be analyzed by the system. By means of the system samples generated by removal of material can be analyzed directly at the spot where they are produced.

Preferably, the sample is ambient air.

In the following, the present invention as well as its preferred embodiments will be explained based on the figures Figs. 1-8.
Fig. 1 shows a system according to the present invention;
Fig. 2 shows an exemplary embodiment of a plasma torch;
Fig. 3 shows an exemplary embodiment of a sample introduction unit;
Fig. 4 shows an exemplary embodiment of a classifier;
Fig. 5 shows an exemplary embodiment of a classifier in combination with a waste collector;
Fig. 6 shows an exemplary embodiment of a MICAP-MS;
Fig. 7 shows a test result obtained by surface drilling of a reference material and measuring the generated dust by means of a system according to Fig. 6; and
Fig. 8 shows a table with the obtained results from Fig. 7.

In the figures, same elements are provided with the same reference numbers.

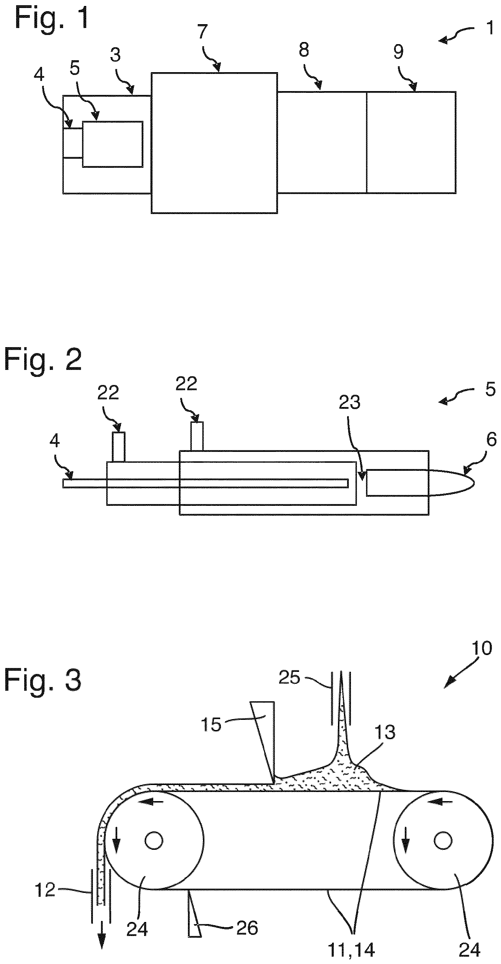

Fig. 1 schematically illustrates a system 1 according to the present invention. The system 1 comprises a sample preparation unit 3 with a sample inlet 5 and a plasma torch 5, an interface 7, a detector 8 and an evaluation unit 9. The sample inlet 4 may be arranged upstream of the plasma torch 5. The components of the system 1 may also be arranged differently. The evaluation unit 9 can also be arranged apart from the other components. The system 1 or some of its components may be housed in a housing (not shown). In case the system 1 is embodied as a mass spectrometer, the interface 7 may be a mass-analyzer and the detector 8 may be an ion-electron multiplier, a Faraday collector, a Daly detector, a microchannel plate or a channeltron. In case the system 1 is embodied as an optical spectrometer, the interface 7 may be a wavelength-selector and the detector 8 a photomultiplier tube or a CCD camera.

An exemplary plasma torch 5 of the Fassel type is shown in Fig. 2. The plasma torch 5 comprises two gas inlets, for main gas 22 and auxiliary gas 22 with which the plasma is generated and sustained, respectively. The sample 2 enters the plasma torch 5 through the sample inlet 4 and is guided towards the plasma 6. The plasma 6 comprises on one side of the plasma 6 a zone 23 with a negative pressure relative to the sample inlet 4. The zone 23 therefore allows for aspirating or sucking in the sample 2 through the sample inlet 4. Obviously, also other types of plasma torches 5, e.g. mini-torches or low-flow torches, can be used in connection with the present invention. Since the system 1 is configured to analyze samples 2 comprising air, the plasma 6 needs to be stable against certain doses of air. The plasma 6 may even be configured to be sustained with air alone, wherein the air may enter the plasma torch 5 through the sample inlet 4.

Further, Fig. 3 illustrates an example of a sample introduction unit 10 which is configured to introduce the sample 2 into the sample inlet 4. The system 1 may be used to analyze air composition or aerosols. The aerosol to be analyzed by the system 1 may originally be in the form of a liquid which is brought into the form of an aerosol by means of a nebulizer unit. The aerosol to be analyzed may alternatively or additionaly originate from dry particles, e.g. a powder or dust, which is brought into the form of an aerosol by means of the plasma 6 which aspirates the particles together with air or by other means configured to mix the particles with air such that an aerosol is formed. The sample 2 may also be produced by removal of material from a surface or object, e.g., by drilling. In that case, the particles or aerosol formed by the material removal can be analyzed by the system 1. In case the sample 2 comprises particles 13, the evaluation unit 9 may be configured to analyze the particles 13 in the sample 2 with regard to their isotopic composition, size, concentration and/or number.

The sample introduction unit 10 may comprise a transport means 11, e.g., a moving ribbon 14, which is configured to transport the sample 2 towards the sample inlet 4, and a connecting unit 12 which is configured to be connectable with the sample inlet 4. The sample introduction unit 10 in Fig. 3 further comprises a transfer tube 25 through which particles 13 are guided towards the moving ribbon 14 which is being loaded with the particles 13 and moves the particles 13 towards the sample inlet 4 by means of the rollers 24. A dosage controller 15 is arranged and configured to control the quantity of particles 13 entering the sample inlet 4 through the connecting unit 12. The sample inlet or the sample introduction unit can be open to the ambient atmosphere in order to aspirate air together with the particles thus forming an aerosol or an air composition comprising the particles Further, the moving ribbon 14 may be cleaned by means of a cleaning unit 26.

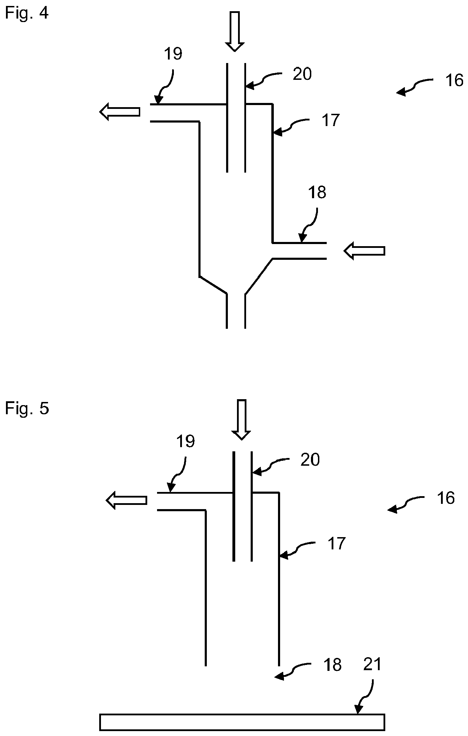

The system 1 may further comprise a classifier 16 as shown in Fig. 4 which is configured to separate smaller particles from larger particles within the sample 2 and to guide particles with a mass below a predefined upper mass limit to the sample inlet 4. The classifier 16 may comprise a container 17 with an inlet 18 which is connected to air or gas, and an outlet 19 which is connectable to the sample inlet 4. Moreover, a tube 20 may be inserted partially into the container 17 such that the flow of the sample 2 is opposed to the flow of the particles with a mass below the predefined upper mass limit towards the outlet 19. Particles with a mass above the predefined upper mass limit will sediment towards the lower end of the container 17. The suction property of the plasma 6 is used to aspirate the particles 13 together with air as an aerosol into the system 1.

As shown in Fig. 5, the classifier may comprise a waste collector 21 in in order to collect the particles with a mass above the predefined upper mass limit. The waste collector 21 may be arranged at a lower end of the container 17. The inlet 18 may simply be opened to ambient air. The classifier 16 may be combined with the sample introduction unit 10, wherein the classifier 16 is arranged between the sample introduction unit 10 and the sample inlet 4.

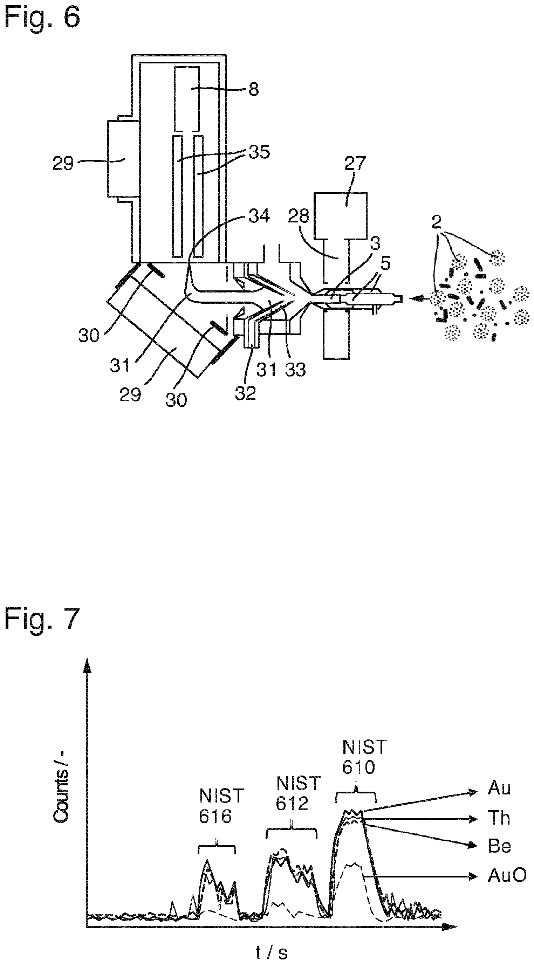

At last, Fig. 6 illustrates an exemplary embodiment of system 1 as microwave inductively coupled atmospheric plasma mass spectrometer (MICAP-MS). The sample 2 is aspirated by means of the plasma 6 through the sample inlet 4 into the system 1. The plasma 6 is generated by means of a MICAP source 27 in combination with a waveguide 28 specialized for MICAP. Upon entering the plasma torch 5, the sample 2 is ionized by the plasma 6 such that ions and/or photons are generated. In order to detect the generated ions with the detector 8, the ions are guided by means of an interface 7 towards the detector 8.

After the plasma 6 a skimmer cone 33 is arranged to skim and focus the ions into an ion beam 31. A collisional/reaction gas 32 may be introduced into the ion beam 31 in order to remove interfering ions through ion/neutral reactions. The ion beam 31 is then directed and focused by means of ion mirrors 30 towards the mass analyzer 35 in which the ions are separated according to their mass-to-charge ratio m/z. The ions are then detected by the detector 8. Pumps 29 can be arranged to generate vacuum conditions after the plasma torch 5.

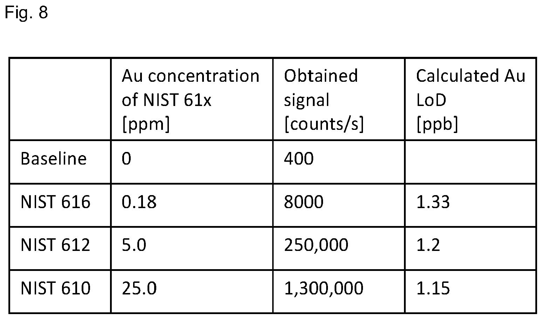

In Fig. 7 some results are shown which were obtained with the system 1 presented in Fig. 6. The sample 2 was produced by mechanically drilling reference standards with known gold (Au) concentration. The three reference standards were taken from NIST, standards 616, 612 and 610 which contain gold in different amounts (see. Fig. 8). The reference standards were each worked with a drill one after the other so that dust was generated from the surface of each reference standard. The dust (in air) was aspirated into the system 1 by means of the plasma 6. Each reference standard gave rise to a signal from gold (Au), thorium (Th), beryllium (Be) and gold oxide (AuO) which is shown as counts per second over the time.

The results of Fig. 7 are further presented in Fig. 8. For each reference standard the known concentration of gold in given in ppm, as well the signal intensity obtained from the graph of Fig. 7 in counts per second. From the latter, a limit of detection (LoD) for gold was calculated. It was found that the limit of detection for all three samples was within 1.15 to 1.33 ppb, thus proving that the present invention allows for highly sensitive measurements of gold concentrations.

### Reference symbols

- 1: system
- 2: sample
- 3: sample preparation unit
- 4: sample inlet
- 5: plasma torch
- 6: plasma
- 7: interface
- 8: detector
- 9: evaluation unit
- 10: sample introduction unit
- 11: transport means
- 12: connecting unit
- 13: particles
- 14: moving ribbon
- 15: dosage controller
- 16: classifier
- 17: container
- 18: inlet
- 19: outlet
- 20: tube
- 21: waste collector
- 22: gas inlet
- 23: zone with negative pressure relative to sample inlet
- 24: rollers
- 25: transfer tube
- 26: cleaning unit
- 27: MICAP source
- 28: MICAP waveguide
- 29: pump
- 30: ion mirror
- 31: ion beam
- 32: reaction/collisional gas
- 33: skimmer cone
- 34: focused ion beam
- 35: mass analyzer

## Claims

1. System (1) for analyzing a sample (2), wherein the sample is an air composition or an aerosol, the system (1) comprising
- a sample preparation unit (3) with a sample inlet (4) and a plasma torch (5), wherein the sample (2) enters the system (1) through the sample inlet (4), wherein the plasma torch (5) is configured to produce a plasma (6) which ionizes the sample (2) such that ions and/or photons are generated, wherein the plasma (6) is configured to aspirate the sample (2) through the sample inlet (4),
- an interface (7) which is configured to guide the generated ions and/or photons towards a detector (8),
- the detector (8) which is configured to detect the generated ions and/or photons, and
- an evaluation unit (9) which is configured to analyze the sample (2) by means of the detected ions and/or photons.

2. System (1) according to claim 1,
wherein the system (1) comprises a sample introduction unit (10) which is configured to introduce the sample (2) into the sample inlet (4).

3. System (1) according to claim 2,
wherein the sample introduction unit (10) comprises a transport means (11) which is configured to transport the sample (2) towards the sample inlet (4) and a connecting unit (12) which is connectable with the sample inlet (4).

4. System (1) according to claim 2,
wherein the sample (2) comprises particles (13), wherein the sample introduction unit (10) comprises a moving ribbon (14), a dosage controller (15) and a connecting unit (12), wherein the connecting unit (12) is connectable with the sample inlet (4), wherein the moving ribbon (14) is configured to be loaded with the particles (13) and to move the particles (13) towards the sample inlet (4), wherein the dosage controller (15) is configured to control the amount of the sample (2) entering the sample inlet (4) through the connecting unit (12).

5. System (1) according to any of claims 1-4,
wherein the sample (2) comprises particles (13), wherein the system (1) comprises a classifier (16), wherein the classifier (16) is configured to separate smaller particles from larger particles within the sample (2) and to guide particles with a mass below a predefined upper mass limit to the sample inlet (4).

6. System (1) according to claim 5,
wherein the classifier (16) comprises a container (17) with an inlet (18) and an outlet (19), and a tube (20) partially inserted into the container (17), wherein the outlet (19) is connectable to the sample inlet (4), wherein the inlet (18) is connected to air or gas, wherein the tube (20) is arranged and configured to flow the sample (2) into the container (17) such that the flow of the sample (2) is opposed to the flow of the particles with a mass below a predefined upper mass limit towards the outlet (19).

7. System (1) according to any of claims 5-6,
wherein the classifier (16) comprises a waste collector (21) which is arranged such that particles with a mass above the predefined upper mass limit are collected in the waste collector (21).

8. System (1) according to any of claims 5-7,
wherein the classifier (16) is arranged between the sample introduction unit (10) and the sample inlet (4).

9. System (1) according to any of claims 1-8,
wherein the plasma (6) is configured to be sustained with air, wherein the air is entering the plasma torch (5) through the sample inlet (4).

10. System (1) according to any of claims 1-9,
wherein the sample (2) comprises particles (13), wherein the evaluation unit (9) is configured to analyze the particles (13) in the sample (2) with regard to their isotopic composition, size, concentration and/or number.

11. System (1) according to any of claims 1-10,
wherein the sample inlet (4) is arranged upstream of the plasma torch (5).

12. System (1) according to any of claims 1-11,
wherein the interface (7) comprises a mass-analyzer and/or a wavelength selector.

13. System (1) according to any of claims 1-12,
wherein the system (1) is a microwave inductively coupled atmospheric plasma mass spectrometer, a microwave inductively coupled atmospheric plasma optical emission spectrometer, a radio-frequency inductively coupled mass spectrometer, radio-frequency inductively coupled optical spectrometer, a glow discharge mass spectrometer, or a glow discharge optical spectrometer.

14. System (1) according to any of claims 1-13,
wherein the sample (2) is produced by removal of material from a surface or object.

15. System (1) according to any of claims 1-14,
wherein the sample (2) is ambient air.
